# EUROPEAN PATENT APPLICATION

(11) **EP 4 614 674 A1**
(43) Date of publication of application: **10.09.2025**
(21) Application number: 23884168.8
(22) Date of filing: 02.06.2023
(51) Int. Cl.: H01M 10/613, H01M 10/615, H01M 10/627, H01M 10/6556, H01M 10/6563, H01M 10/6568, H05K 7/20

(54) **ENERGY STORAGE SYSTEM AND THERMAL MANAGEMENT APPARATUS THEREOF**

(30) Priority: 03.11.2022 CN 202222931005 U
(71) Applicant: Sungrow Power Supply Co., Ltd., Hefei, Anhui 230088 (CN)
(72) Inventor: BAO, Tong, Hefei, Anhui 230088 (CN)
(74) Representative: Epping - Hermann - Fischer
(86) International application number: PCT/CN2023/097956
(87) International publication number: WO 2024/093228

(57) **Abstract**

Disclosed in the present invention are an energy storage system and a thermal management apparatus thereof. The thermal management apparatus of the energy storage system comprises: at least one heat exchange module, and a cooling module, which is used for providing a cooling medium and cooling the heat exchange module, wherein the heat exchange module comprises a battery pack group and a power conversion system group, which are connected in series; and in a cooling path, the power conversion system group is located downstream of the battery pack group. The thermal management apparatus of the energy storage system effectively reduces the size, weight and cost of the entire thermal management apparatus, improves the cooling effect, and also increases the energy efficiency ratio; and when a battery pack group needs to be heated, a cooling medium is heated during the process of same flowing through the power conversion system group, such that the energy consumption required for heating the battery pack group is reduced, and the energy efficiency ratio is further increased.

## Description

The present application claims the priority to Chinese Patent Application No. 202222931005.9, titled "ENERGY STORAGE SYSTEM AND THERMAL MANAGEMENT APPARATUS THEREOF", filed with the China National Intellectual Property Administration on November 03, 2022, the entire content of which is incorporated herein by reference.

### FIELD

The present application relates to the technical field of thermal management of energy storage units, and in particular to an energy storage system and a thermal management apparatus thereof.

### BACKGROUND

At present, the energy storage system uses lithium-ion energy storage batteries for energy storage. Lithium-ion energy storage batteries are very sensitive to high and low temperatures. In order to ensure reliable operation, thermal management is required for the energy storage system.

In order to be adaptable for a large-capacity energy storage battery, a liquid-cooled power conversion system (PCS) and a liquid-cooled battery pack are employed for thermal management. Specifically, a separate liquid-cooling system is provided for thermal management of the power conversion system, and another separate liquid-cooling system is provided for thermal management of the battery pack.

In the above structure, two liquid-cooling systems are provided, which leads to the large size, heavy weight, high cost and low energy efficiency ratio of the entire structure.

In summary, a technical problem to be solved by those skilled in the art is to provide thermal management to the power conversion system and the battery pack in order to improve the energy efficiency ratio and reduce the size, weight and cost.

### SUMMARY

In view of this, an object of the present application is to provide a thermal management apparatus of an energy storage system to improve energy efficiency ratio and reduce size, weight and cost. Another object of the present application is to provide an energy storage system including the above thermal management apparatus.

To achieve the above objects, the present application provides the following technical solutions.

A thermal management apparatus of an energy storage system includes at least one heat exchange module, and a cooling module configured to provide a cooling medium to cool the heat exchange module, where
the heat exchange module includes a battery pack group and a power conversion system group which are connected in sequence, and the power conversion system group is located downstream of the battery pack group in a cooling path.

Optionally, the number of heat exchange module is at least two, and the at least two heat exchange modules are arranged in parallel.

Optionally, in each heat exchange module, a flow rate of the cooling medium flowing through the battery pack group and/or a flow rate of the cooling medium flowing through the power conversion system group can be adjusted.

Optionally, the heat exchange module further includes a bypass channel and a heat exchange valve unit, where
the heat exchange valve unit and the bypass channel cooperate to adjust the flow rate of the cooling medium flowing through the power conversion system group.

Optionally, the heat exchange valve unit has a first state, a second state, and a third state. When the heat exchange valve unit is in the first state, the bypass channel is blocked, and the battery pack group and the power conversion system group are in communication with each other. When the heat exchange valve unit is in the second state, the bypass channel is in communication with the battery pack group, and the power conversion system group is bypassed. When the heat exchange valve unit is in the third state, the battery pack group and the power conversion system group are in communication with each other, and the bypass channel is in communication with the battery pack group; and/or the heat exchange valve unit is a heat exchange switching valve, which is a three-way valve.

Optionally, the number of heat exchange module is one, and the battery pack group and the power conversion system group are arranged in different compartments.

Optionally, in each of the at least two heat exchange modules, the battery pack group and the power conversion system group are arranged in one compartment, where
in any two of the at least two heat exchange modules, the battery pack group and the power conversion system group of one heat exchange module are arranged in a compartment different from another compartment where the battery pack group and the power conversion system group of the other heat exchange module are arranged.

Optionally, the battery pack group includes at least two battery packs; and in the cooling path, any two of the at least two battery packs in the battery pack group are arranged in parallel; and/or
the power conversion system group includes at least two power conversion systems; and in the cooling path, any two of the at least two power conversion systems in the power conversion system group are arranged in parallel.

Optionally, the cooling module is an air-cooling unit and/or a refrigerant unit. In a case that the cooling module includes both the air-cooling unit and the refrigerant unit, the air-cooling unit and the refrigerant unit are integrated into one.

Optionally, the thermal management apparatus for the energy storage system further includes a heater and/or a circulation pump, where
the heater is configured to heat the battery pack group of the heat exchange module, and
the circulation pump is configured to drive the cooling medium to circulate.

Based on the above thermal management apparatus for the energy storage system, the present application further provides an energy storage system including the thermal management apparatus according to any one of the above solutions.

In the thermal management apparatus for the energy storage system according to the present application, the cooling module is provided to cool the heat exchange module, the heat exchange module includes a battery pack group and a power conversion system group which are connected in sequence, and the battery pack group and the power conversion system group share the same cooling module, so that the size, weight and cost of the entire thermal management apparatus is effectively reduced compared with the solution in the prior art that two sets of liquid-cooling systems are needed, and thus the energy efficiency ratio is also improved. Moreover, the power conversion system group is located downstream of the battery pack group in the cooling path, that is, the cooling medium can first cool the battery pack group and then cool the power conversion system group. Since the battery pack has a temperature tolerance lower than that of the power conversion system, the above arrangement is beneficial to cooling the battery pack group to its temperature tolerance range and cooling the power conversion system group to its temperature tolerance range, thereby improving the cooling effect and further improving the energy efficiency ratio.

In the energy storage system, when the temperature is lower than a set value, the temperature of the battery pack is too low, which will affect the normal operation of the battery pack, but the power conversion system can still work normally and generate heat. Therefore, when the temperature is lower than the set value, the cooling module is in a shutdown state, that is, the cooling medium no longer cools the battery pack group, and the battery pack group needs to be heated. Because the battery pack group and the power conversion system group are connected in sequence, the cooling medium is heated when flowing through the power conversion system group. In this case, the power conversion system group heats the cooling medium, and the heated cooling medium can heat the battery pack group, to increase the temperature of the battery pack group, thereby reducing the energy consumption required for heating the battery pack group, and further improving the energy efficiency ratio.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic structural view of a thermal management apparatus for an energy storage system according to a first embodiment of the present application;
FIG. 2 is a schematic structural view of a thermal management apparatus for an energy storage system according to a second embodiment of the present application; and
FIG. 3 is a schematic structural view of a cooling module in FIG. 1 and FIG. 2.

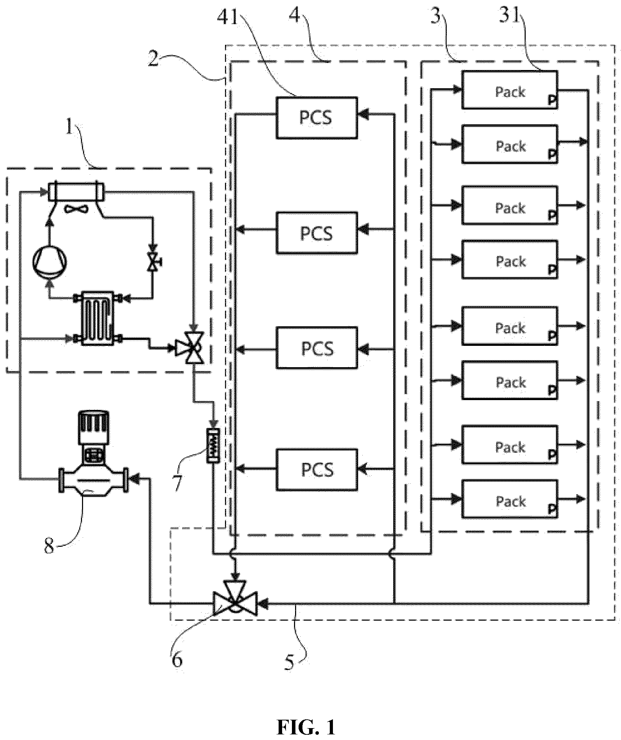

**Reference numerals in FIG. 1 to FIG. 3:**

| | | | |
|---|---|---|---|
| 1 | cooling module, | 2 | heat exchange module, |
| 3 | battery pack group, | 4 | power conversion system group, |
| 5 | bypass channel, | 6 | heat exchange switching valve, |
| 7 | heater, | 8 | circulation pump, |
| 9 | energy storage compartment, | 11 | compressor, |
| 12 | evaporator, | 13 | condenser, |
| 14 | fan, | 15 | throttling element, |
| 16 | first cooling flow channel, | 17 | second cooling flow channel, |
| 18 | cooling switching valve, | 19 | inlet of cooling module, |
| 110 | outlet of cooling module, | 31 | battery pack, |
| 41 | power conversion system. | | |

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

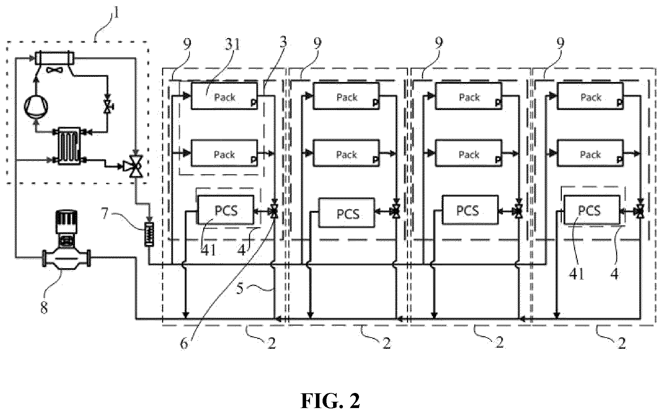

As shown in FIG. 1 and FIG. 2, a thermal management apparatus for an energy storage system according to an embodiment of the present application includes a heat exchange module 2 and a cooling module 1.

The cooling module 1 is configured to provide a cooling medium and cool the heat exchange module 2 via the cooling medium. It can be understood that the temperature of the cooling medium provided by the cooling module 1 is within a set range to ensure that a battery pack group 3 and a power conversion system group 4 can be cooled.

There is at least one heat exchange module 2, and the heat exchange module 2 includes a battery pack group 3 and a power conversion system group 4 connected in sequence, where the power conversion system group 4 is located downstream of the battery pack group 3 in a cooling path.

It can be understood that in the cooling path, the battery pack group 3 and the power conversion system group 4 are connected in sequence.

Specifically, the battery pack group 3 is provided with a first cooling plate, and the power conversion system group 4 is provided with a second cooling plate. The cooling module 1 is configured to cool the heat exchange module 2, and specifically is configured to cool the first cooling plate and the second cooling plate. The battery pack group 3 and the power conversion system group 4 are connected in sequence, and specifically the first cooling plate and the second cooling plate are connected in sequence. In the cooling path, the power conversion system group 4 is located downstream of the battery pack group 3, and specifically the second cooling plate is located downstream of the first cooling plate in the cooling path.

In the thermal management apparatus for the energy storage system according to the above embodiment, the heat exchange module 2 is cooled by the cooling module 1, the heat exchange module 2 includes the battery pack group 3 and the power conversion system group 4 which are connected in sequence. In this way, the battery pack group 3 and the power conversion system group 4 share the same cooling module 1, which effectively reduces the size, weight and cost of the entire thermal management apparatus, compared with the solution in the prior art that two sets of liquid-cooling systems are needed, and thus the energy efficiency ratio is also improved.

In the energy storage system, the battery pack 31 has a temperature tolerance lower than that of the power conversion system 41, and specifically, the maximum temperature tolerated by the battery pack 31 is lower than the maximum temperature tolerated by the power conversion system 41. Based on this, the power conversion system group 4 is located downstream of the battery pack group 3 in the cooling path, that is, the cooling medium first cools the battery pack group 3 and then cools the power conversion system group 4. Since the temperature tolerance of the battery pack 31 is lower than that of the power conversion system 41, the above arrangement is beneficial to cooling the battery pack group 3 to its temperature tolerance range and cooling the power conversion system group 4 to its temperature tolerance range, thereby improving the cooling effect and further improving the energy efficiency ratio.

In the energy storage system, when the temperature is lower than a set value, the temperature of the battery pack 31 is too low, which will affect the normal operation of the battery pack 31, but the power conversion system 41 can still work normally and generate heat. Therefore, when the temperature is lower than the set value, the cooling module 1 is in a shutdown state, that is, the cooling medium no longer cools the battery pack group 3, and the battery pack group 3 needs to be heated. Because the battery pack group 3 and the power conversion system group 4 are connected in sequence, the cooling medium is heated when flowing through the power conversion system group 4. This situation can be called low-temperature heating operation condition, where the power conversion system group 4 functions to heat the cooling medium. In this way, the heat generated by the power conversion system group 4 itself is fully utilized to preheat the battery pack group 3, so as to maximize the use of heat energy which has not been utilized, and thus the preheating time of the battery pack group 3 under the low-temperature heating operation condition is minimized, the additional heat required for heating the battery pack group 3 is reduced or even omitted, and thereby the integration level and the energy efficiency ratio are maximized.

In the thermal management apparatus for the energy storage system, there may be one or two or more heat exchange modules 2. If there are two or more heat exchange modules 2, at least two of the heat exchange modules 2 may be arranged in parallel, and/or at least two of the heat exchange modules may be connected in sequence.

In a specific embodiment, as shown in FIG. 2, the heat exchange modules 2 are arranged in parallel. In this way, compared with the solution where the heat exchange modules 2 are connected in series, the flow path of the cooling medium is shortened, which improves the thermal management effects; and compared with the solution where only one heat exchange module 2 is provided, the flow rate of the cooling medium flowing through the power conversion system group 4 and the flow rate of the cooling medium flowing through the battery pack group 3 in each heat exchange module 2 can be adjusted separately, so that the temperature of the battery pack group 3 and the temperature of the power conversion system group 4 in each heat exchange module 2 can be controlled separately, and thus the thermal management accuracy is improved.

In a specific embodiment, in order to improve the thermal management accuracy, in each heat exchange module 2, the flow rate of the cooling medium flowing through the battery pack group 3 and/or the power conversion system group 4 is adjustable. In this way, the cooling amount allocated to the power conversion system group 4 and the heat taken away from the power conversion system group 4 can be adjusted, and the cooling amount and heat allocated to the battery pack group 3 can be adjusted, to achieve the goal of refined thermal management.

In order to simplify the adjustment, the flow rate of the cooling medium flowing through the power conversion system group 4 in each heat exchange module 2 is adjustable.

Specifically, when the battery pack group 3 is cooled, since the power conversion system 41 has a high temperature tolerance, the flow rate of the cooling medium flowing through the power conversion system group 4 can be reduced to some extent, to save the cooling capacity on the premise that the normal operation of the power conversion system 41 is ensured.

When the battery pack group 3 and the power conversion system group 4 are cooled, the flow rate of the cooling medium flowing through the power conversion system group 4 may be adjusted according to the temperature of the power conversion system group 4. When the battery pack group 3 is heated, the flow rate of the cooling medium flowing through the power conversion system group 4 may be adjusted according to the temperature of the power conversion system group 4, the temperature of the battery pack group 3 and the temperature of the cooling medium.

In order to adjust the flow rate of the cooling medium flowing through the power conversion system group 4, the heat exchange module 2 may further include a bypass channel 5 and a heat exchange valve unit. The heat exchange valve unit and the bypass channel 5 cooperate with each other to adjust the flow rate of the cooling medium flowing through the power conversion system group 4.

It can be understood that the flow rate of the cooling medium flowing through the power conversion system group 4 may be adjusted to be zero by cooperation between the heat exchange valve unit and the bypass channel 5, and in this case, the power conversion system group 4 is bypassed. Alternatively, the flow rate of the cooling medium flowing through the power conversion system group 4 may be adjusted to be greater than zero by cooperation between the heat exchange valve unit and the bypass channel 5.

On one hand, the heat exchange valve unit may have a first state and a second state. When the heat exchange valve unit is in the first state, the bypass channel 5 is blocked and the battery pack group 3 is in communication with the power conversion system group 4; in this case, the bypass channel 5 is not in communication with the battery pack group 3, the cooling medium flows through the battery pack group 3 and the power conversion system group 4, and the cooling medium does not flow through the bypass channel 5. When the heat exchange valve unit is in the second state, the bypass channel 5 is in communication with the battery pack group 3 and the power conversion system group 4 is bypassed; in this case, the cooling medium flows through the battery pack group 3 and the bypass channel 5, and the cooling medium does not flow through the power conversion system group 4, that is, the flow rate of the cooling medium flowing through the power conversion system group 4 is zero.

On the other hand, the heat exchange valve unit may have a first state, a second state and a third state. When the heat exchange valve unit is in the first state, the bypass channel 5 is blocked, and the battery pack group 3 is in communication with the power conversion system group 4; in this case, the bypass channel 5 is not in communication with the battery pack group 3, the cooling medium flows through the battery pack group 3 and the power conversion system group 4, and the cooling medium does not flow through the bypass channel 5. When the heat exchange valve unit is in the second state, the bypass channel 5 is in communication with the battery pack group 3, and the power conversion system group 4 is bypassed; in this case, the cooling medium flows through the battery pack group 3 and the bypass channel 5, and the cooling medium does not flow through the power conversion system group 4, that is, the flow rate of the cooling medium flowing through the power conversion system group 4 is zero. When the heat exchange valve unit is in the third state, the battery pack group 3 is in communication with the power conversion system group 4, and the bypass channel 5 is also in communication with the battery pack group 3; in this case, the cooling medium flows through the battery pack group 3, the power conversion system group 4 and the bypass channel 5.

When the heat exchange valve unit is in the first state, the flow rate of the cooling medium flowing through the power conversion system group 4 is defined as a first flow rate; and when the heat exchange valve unit is in the third state, the flow rate of the cooling medium flowing through the power conversion system group 4 is defined as a second flow rate; where the first flow rate and the second flow rate are both greater than zero, and the first flow rate is greater than the second flow rate.

Therefore, when the heat exchange valve unit has the first state, the second state and the third state, the adjustment accuracy is relatively high, that is, the thermal management accuracy is relatively high.

In order to further adjust the flow rate of the cooling medium, the flow rate is adjustable when the heat exchange valve unit is in the first state; and/or, the flow rate is adjustable when the heat exchange valve unit is in the third state.

The specific structure of the heat exchange valve unit is selected based on actual needs. In order to simplify the structure, the heat exchange valve unit may be a heat exchange switching valve 6, and the heat exchange switching valve 6 is a three-way valve.

In the case that the heat exchange valve unit has the first state and the second state, the heat exchange switching valve 6 may be a two-position three-way valve. In the case that the heat exchange valve unit has the first state, the second state and the third state, the heat exchange switching valve 6 may be a three-position three-way valve.

In practical application, the three-way valve may also be replaced by two two-way valves, where one of the two-way valves is connected in sequence between the battery pack group 3 and the power conversion system group 4, and the other two-way valve is connected in the bypass channel 5, which is not limited to the above embodiments.

In the thermal management apparatus for the energy storage system, if one heat exchange module 2 is provided, for the convenience of arrangement, the battery pack group 3 and the power conversion system group 4 may be arranged in different compartments. Of course, the battery pack group 3 and the power conversion system group 4 may also be provided in the same compartment.

In the thermal management apparatus for the energy storage system, if there are two or more heat exchange modules 2, in order to facilitate the parallel arrangement of any two heat exchange modules 2, the battery pack group 3 and the power conversion system group 4 of each heat exchange module 2 are arranged in one compartment. As shown in FIG. 2, the battery pack group 3 and the power conversion system group 4 of each heat exchange module 2 are arranged in one energy storage compartment 9. For any two of the heat exchange modules 2, the battery pack group 3 and the power conversion system group 4 of one of the two heat exchange modules 2 are arranged in a compartment different from the compartment where the battery pack group 3 and the power conversion system group 4 of the other heat exchange module are arranged.

In each heat exchange module 2, the number and arrangement of the battery pack group 3 and the power conversion system group 4 are selected according to actual needs.

The battery pack group 3 includes at least one battery pack 31. The number of the battery packs 31 may be selected according to actual needs, which is not limited in this embodiment.

If there are at least two battery packs 31 in the battery pack group 3, the at least two battery packs 31 are arranged in parallel, and/or the at least two battery packs 31 are arranged in series. In order to improve the thermal uniformity, any two of the battery packs 31 in the battery pack group 3 are arranged in parallel.

The power conversion system group 4 includes at least one power conversion system 41. The number of the power conversion systems 41 is selected according to actual needs, which is not limited in this embodiment.

If the power conversion system group 4 includes at least two power conversion systems 41, the at least two power conversion systems 41 are arranged in parallel, and/or the at least two power conversion systems 41 are arranged in series. In order to improve the thermal uniformity, any two of the power conversion systems 41 in the power conversion system group 4 may be arranged in parallel.

In the thermal management apparatus for the energy storage system, the type of the cooling module 1 is selected according to actual needs. Specifically, the cooling module 1 is an air-cooling unit and/or a refrigerant unit, where the cooling medium is cooled by the air in the air-cooling unit, and the cooling medium is cooled in the refrigerant unit through heat exchange between the refrigerant and the cooling medium.

In order to further improve the energy efficiency ratio, the cooling module 1 may include an air-cooling unit and a refrigerant unit. In this way, the air cooler unit and/or the refrigerant unit can be selected to work according to actual needs.

However, the above structure is complicated, the size and the weight are large, and the cost is also high. In order to simplify the structure and improve the energy efficiency ratio, the air-cooling unit and the refrigerant unit can be integrated into one.

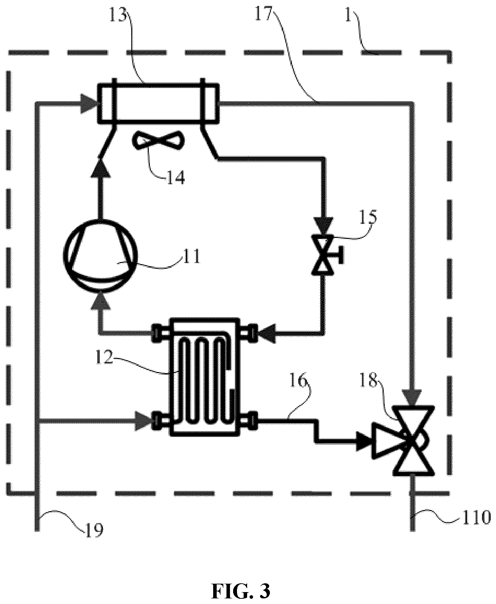

Specifically, as shown in FIG. 3, the cooling module 1 includes a refrigerant unit, a first cooling flow channel 16, a second cooling flow channel 17, and a second valve unit.

The refrigerant unit includes a compressor 11, an evaporator 12, a condenser 13, a throttling element 15, and a fan 14 for blowing air to the condenser 13, where an exhaust port of the compressor 11, the condenser 13, the throttling element 15, the evaporator 12, and a suction port of the compressor 11 are connected in sequence to form a refrigerant refrigeration circuit.

The evaporator 12 has a refrigerant flow channel and a cooling medium flow channel, where the refrigerant flow channel of the evaporator 12 is located in the refrigerant refrigeration circuit, and the cooling medium flow channel of the evaporator 12 is connected to the first cooling flow channel 16 in a series manner.

The condenser 13 has a refrigerant flow channel and a cooling medium flow channel, where the refrigerant flow channel of the condenser 13 is located in the refrigerant refrigeration circuit, and the cooling medium flow channel of the condenser 13 is connected to the second cooling flow channel 17 in a series manner.

In the circulation circuit of the cooling medium, the first cooling flow channel 16 and the second cooling flow channel 17 are arranged in parallel. Specifically, an inlet of the first cooling flow channel 16 and an inlet of the second cooling flow channel 17 are both connected to an inlet 19 of the cooling module; and an outlet of the first cooling flow channel 16 and an outlet of the second cooling flow channel 17 are both connected to an outlet 110 of the cooling module.

The second valve unit has a first state and a second state. When the second valve unit is in the first state, the refrigerant unit is in a working state, and the outlet of the first cooling flow channel 16 is in communication with the outlet 110 of the cooling module. When the second valve unit is in the second state, the compressor 11 is in a non-working state, and the outlet of the second cooling flow channel 17 is in communication with the outlet 110 of the cooling module.

In the thermal management apparatus for the energy storage system, in the case that the second valve unit is in the first state, which is referred to as a refrigeration operation condition, the refrigerant unit is in a working state and the outlet of the first cooling flow channel 16 is in communication with the outlet 110 of the cooling module, which indicates that the cooling medium is cooled by the refrigerant in the evaporator, and then flows out from the outlet 110 of the cooling module and enters the heat exchange module 2 to cool the battery pack group 3 and the power conversion system group 4. In this case, the cooling medium entering the heat exchange module 2 has a low temperature, which is suitable for a situation of high temperature.

In the case that the second valve unit is in the second state, which is referred to as an air-cooling operation condition, the compressor 11 is in a non-working state and the outlet of the second cooling flow channel 17 is in communication with the outlet 110 of the cooling module, which indicates that the cooling medium flows through the condenser 13, the cooling medium is cooled by the fan 14, the air-cooled cooling medium flows out from the outlet 110 of the cooling module and enters the heat exchange module 2 to cool the battery pack group 3 and the power conversion system group 4. In this case, the temperature of the cooling medium entering the heat exchange module 2 is higher than that of the cooling medium cooled by the refrigerant, which is suitable for a situation where the temperature is low and the battery pack group 3 does not need to be heated.

In order to improve the accuracy of thermal management, the flow rate of the cooling medium is adjustable when the second valve unit is in the first state, and/or the flow rate of the cooling medium is adjustable when the second valve unit is in the second state.

The structure of the second valve unit is selected according to actual needs. In order to simplify the structure, the second valve unit may be selected as a cooling switching valve 18, and the cooling switching valve 18 is a three-way valve. It can be understood that one valve port of the cooling switching valve 18 is connected to the outlet of the first cooling flow channel 16, another one valve port of the cooling switching valve 18 is connected to the outlet of the second cooling flow channel 17, and the remaining valve port of the cooling switching valve 18 is connected to the outlet 110 of the cooling module.

In practical application, the cooling switching valve 18 may be replaced by two two-way valves, one being connected to the first cooling flow channel 16 in a series manner, and the other two-way valve is connected to the second cooling flow channel 17 in a series manner, which is not limited to the above embodiments.

If the temperature of the battery pack 31 is too low, the normal use of the battery pack 31 will be affected. Therefore, when the temperature is lower than a set value, the battery pack group 3 can no longer be cooled and needs to be heated instead. In order to optimize the thermal management of the battery pack group 3, the thermal management apparatus for the energy storage system may further include a heater 7, which is configured for heating the battery pack group 3 of the heat exchange module 2. Specifically, the heater 7 may be configured to heat the cooling medium and heat the battery pack group 3 through the heated cooling medium. It can be understood that in this case, the cooling medium serves as a heating liquid.

In the thermal management apparatus for the energy storage system, if the battery pack group 3 can be heated by the heat from the power conversion system group 4, the heater 7 is started only when the heat from the power conversion system group 4 cannot meet the requirement for heating the battery pack group 3 under the low-temperature heating operation condition.

In order to improve the heating effect, the heater 7 may be located downstream of the cooling module 1 and upstream of all the heat exchange modules 2. Alternatively, the heater 7 may be located upstream of the cooling module 1 and downstream of all the heat exchange modules 2.

In practical application, in a case that the bypass channel 5 is not provided, the heated cooling medium flows through the power conversion system group 4 after heating the battery pack group 3. In the case that the bypass channel 5 is provided, the flow direction of the cooling medium after heating the battery pack group 3 is selected according to actual needs.

The type of the heater 7 is selected according to actual needs, for example, the heater 7 is an electric heater, which is not limited in this embodiment.

In order to ensure the circulation of the cooling medium, the thermal management apparatus for the energy storage system further includes a circulation pump 8, which is configured for driving the cooling medium to circulate.

Specifically, the circulation pump 8 may be located downstream of the cooling module 1 and upstream of all the heat exchange modules 2. Alternatively, the circulation pump 8 may also be located upstream of the cooling module 1 and downstream of all the heat exchange modules 2.

In practical application, the circulation pump 8 may be arranged at other positions, which is not limited to the above embodiments.

The type of the circulation pump 8 is selected according to actual needs, which is not limited in this embodiment.

In order to more specifically describe the technical solutions in this application, two embodiments are provided as follows.

### First Embodiment

As shown in FIG. 1 and FIG. 3, the thermal management apparatus for the energy storage system according to the first embodiment includes a cooling module 1, a heat exchange module 2, a heater 7, and a circulation pump 8.

The cooling module 1 is used to provide a cooling medium and cool the heat exchange module 2 through the cooling medium, the circulation pump 8 is used to drive the cooling medium to circulate, and the heater 7 is used to heat the cooling medium so as to heat the battery pack group 3.

The cooling module 1 employs the structure shown in FIG. 3, that is, the cooling module 1 is an integrated unit of an air-cooling unit and a refrigerant unit.

One heat exchange module 2 is provided, and the heat exchange module 2 includes a battery pack group 3 and a power conversion system group 4 which are connected in sequence, where the power conversion system group 4 is located downstream of the battery pack group 3 in a cooling path. It can be understood that in the cooling path, the battery pack group 3 and the power conversion system group 4 are connected in sequence.

The battery pack group 3 includes multiple battery packs 31 arranged in parallel, and the power conversion system group 4 includes multiple power conversion systems 41 arranged in parallel.

The heat exchange module 2 further includes a bypass channel 5 and a heat exchange valve unit. The heat exchange valve unit and the bypass channel 5 cooperate to adjust the flow rate of the cooling medium flowing through the power conversion system group 4.

Specifically, the heat exchange valve unit is a heat exchange switching valve 6, and the heat exchange switching valve 6 is a three-way valve. The heat exchange switching valve 6 has a first state, a second state and a third state. When the heat exchange switching valve 6 is in the first state, the bypass channel 5 is blocked and the battery pack group 3 is in communication with the power conversion system group 4; in this case, the bypass channel 5 is not in communication with the battery pack group 3, the cooling medium flows through the battery pack group 3 and the power conversion system group 4, and the cooling medium does not flow through the bypass channel 5. When the heat exchange switching valve 6 is in the second state, the bypass channel 5 is in communication with the battery pack group 3 and the power conversion system group 4 is bypassed; in this case, the cooling medium flows through the battery pack group 3 and the bypass channel 5, and the cooling medium does not flow through the power conversion system group 4, that is, the flow rate of the cooling medium flowing through the power conversion system group 4 is zero. When the heat exchange switching valve 6 is in the third state, the battery pack group 3 is in communication with the power conversion system group 4, and the bypass channel 5 is in communication with the battery pack group 3; in this case, the cooling medium flows through the battery pack group 3, the power conversion system group 4 and the bypass channel 5.

The thermal management apparatus for the energy storage system according to the first embodiment has three operation conditions, namely a refrigeration operation condition, an air-cooling operation condition and a low-temperature heating operation condition.

Specifically, when the temperature is higher than a set value, the battery pack group 3 needs to be cooled, and the thermal management apparatus for the energy storage system may be in the refrigeration operation condition or the air-cooling operation condition. When the temperature is lower than the set value, the battery pack group 3 needs to be heated, and the thermal management apparatus for the energy storage system may be in the low-temperature heating operation condition.

The specific details of the air-cooling operation condition and the refrigeration operation condition can be referred to the foregoing description, which will not be repeated here. When the thermal management apparatus for the energy storage system is in the refrigeration operation condition or the air-cooling operation condition, the low-temperature cooling medium generated by the cooling module 1 enters the heat exchange module 2, and flows through all the battery packs 31 arranged in parallel; the cooling medium flowing through the battery packs 31 converges to flow through all the power conversion systems 41 arranged in parallel; and then the cooling medium flowing through the power conversion systems 41 converges to enter the cooling module 1, and the cooling medium heated by the battery packs 31 and the power conversion systems 41 is re-cooled by the cooling module 1.

When the thermal management apparatus for the energy storage system is in the low-temperature heating operation condition, the cooling module 1 is in a shutdown state, the heater 7 is started, and the cooling medium heated by the heater 7 enters the heat exchange module 2, to heat the battery pack group 3, and the cooling medium flowing through the battery pack group 3 is heated when flowing through the power conversion system group 4, thereby reducing the energy consumption of the heater 7.

In practical application, in the low-temperature heating operation condition, the heater 7 may be started or may not be started. If the heater 7 is started, the cooling medium which has flowed through the battery pack group 3 may flow through the power conversion system group 4, or may not flow through the power conversion system group 4. If the heater 7 is not started, the cooling medium which has flowed through the battery pack group 3 flows through the power conversion system group 4.

In the first embodiment, the battery pack group 3 and the power conversion system group 4 may be arranged in different compartments. It can be understood that the battery pack group 3 and the power conversion system group 4 are arranged in different compartments of one cabinet (case).

Of course, the battery pack group 3 and the power conversion system group 4 may be arranged in the same compartment of one cabinet (case), which will not be limited to the above embodiment.

### Second Embodiment

As shown in FIG. 2 and FIG. 3, the second embodiment differs from the first embodiment mainly in that there are at least two heat exchange modules 2, and one power conversion system 41 is provided in each power conversion system group.

In the second embodiment, any two of the heat exchange modules 2 are arranged in parallel. In this way, the cooling medium from the cooling module 1 splits to flow through each heat exchange module 2, and then the cooling medium converges to return to the cooling module 1.

In the second embodiment, the flow rate of the cooling medium flowing through the power conversion system group 4 in each heat exchange module 2 can be independently adjusted. Compared with the first embodiment in which all the battery packs 31 and all the power conversion systems 41 are provided in the same heat exchange module 2, the adjustment accuracy is effectively improved, and thereby the thermal management accuracy is improved.

In the second embodiment, in order to facilitate the parallel arrangement of any two of the heat exchange modules 2, the battery pack group 3 and the power conversion system group 4 in each heat exchange module 2 may be arranged in the same energy storage compartment 9, and the energy storage compartments 9 are provided in one-to-one correspondence with the heat exchange modules 2.

In the thermal management apparatus for the energy storage system according to the first embodiment and the second embodiment, the thermal loads of the power conversion system group 4 and the battery pack group 3 are managed by one apparatus, which greatly reduces the cooling capacity requirement of the cooling module 1 and the heating capacity requirement of the heater 7, and thereby avoiding problems such as high cost and complex structure caused by increasing the power of the external cold source. Moreover, the characteristic that the power conversion system group 4 and the battery pack group 3 have different temperature tolerance is fully utilized, the power conversion system group 4 and the battery pack group 3 are connected in sequence in each heat exchange module 2, normal operations of the power conversion system group 4 and the battery pack group 3 under the refrigeration operation condition and the air-cooling operation condition are ensured. Under the low-temperature heating operation condition, the heat from the power conversion system group 4 is fully utilized to resist heat loss and preheat the battery pack group 3, so the thermal management apparatus for the energy storage system has the advantages of high energy efficiency ratio, high integration level, small weight and size, and high reliability.

Based on the thermal management apparatus for the energy storage system in the above embodiments, this embodiment further provides an energy storage system including a thermal management apparatus, which is the thermal management apparatus for the energy storage system described in the above embodiments.

In order to facilitate the arrangement of the heat exchange module 2, the energy storage system is a string energy storage system. Of course, other types of the energy storage system may also be selected, which is not limited in this embodiment.

Since the thermal management apparatus for the energy storage system has the above technical effects and the energy storage system includes the thermal management apparatus for the energy storage system, the energy storage system also has corresponding technical effects, which will not be described here in detail.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A thermal management apparatus for an energy storage system, comprising at least one heat exchange module, and a cooling module configured to provide a cooling medium to cool the heat exchange module;
wherein the heat exchange module comprises a battery pack group and a power conversion system group which are connected in sequence, and the power conversion system group is located downstream of the battery pack group in a cooling path.

2. The thermal management apparatus for the energy storage system according to claim 1, wherein the number of heat exchange module is at least two, and the at least two heat exchange modules are arranged in parallel.

3. The thermal management apparatus for the energy storage system according to claim 1 or claim 2, wherein in each heat exchange module, a flow rate of the cooling medium flowing through the battery pack group and/or a flow rate of the cooling medium flowing through the power conversion system group is adjustable.

4. The thermal management apparatus for the energy storage system according to claim 3, wherein the heat exchange module further comprises a bypass channel and a heat exchange valve unit, and wherein
the heat exchange valve unit and the bypass channel are configured to cooperate to adjust the flow rate of the cooling medium flowing through the power conversion system group.

5. The thermal management apparatus for the energy storage system according to claim 4, wherein
the heat exchange valve unit has a first state, a second state, and a third state; wherein when the heat exchange valve unit is in the first state, the bypass channel is blocked, and the battery pack group and the power conversion system group are in communication with each other; when the heat exchange valve unit is in the second state, the bypass channel is in communication with the battery pack group, and the power conversion system group is bypassed; and when the heat exchange valve unit is in the third state, the battery pack group and the power conversion system group are in communication with each other, and the bypass channel is in communication with the battery pack group; and/or
the heat exchange valve unit is a heat exchange switching valve, which is a three-way valve.

6. The thermal management apparatus for the energy storage system according to claim 1, wherein the number of heat exchange module is one, and the battery pack group and the power conversion system group are arranged in different compartments.

7. The thermal management apparatus for the energy storage system according to claim 2, wherein
in each of the at least two heat exchange modules, the battery pack group and the power conversion system group are arranged in one compartment; and
in any two of the at least two heat exchange modules, the battery pack group and the power conversion system group of one heat exchange module are arranged in a compartment different from another compartment where the battery pack group and the power conversion system group of the other heat exchange module are arranged.

8. The thermal management apparatus for the energy storage system according to claim 1 or claim 2, wherein
the battery pack group comprises at least two battery packs; and in the cooling path, any two of the at least two battery packs in the battery pack group are arranged in parallel; and/or
the power conversion system group comprises at least two power conversion systems; and in the cooling path, any two of the at least two power conversion systems in the power conversion system group are arranged in parallel.

9. The thermal management apparatus for the energy storage system according to claim 1 or claim 2, wherein the cooling module is an air-cooling unit and/or a refrigerant unit, and in a case that the cooling module comprises both the air-cooling unit and the refrigerant unit, the air-cooling unit and the refrigerant unit are integrated into one.

10. The thermal management apparatus for the energy storage system according to claim 1 or claim 2, further comprising a heater and/or a circulation pump; wherein
the heater is configured to heat the battery pack group of the heat exchange module; and
the circulation pump is configured to drive the cooling medium to circulate.

11. An energy storage system, comprising the thermal management apparatus according to any one of claims 1 to 10.
